# FASCICULE DE BREVET EUROPEEN

(11) **EP 0 467 823 B1**
(45) Date de publication et mention de la délivrance du brevet: **06.10.1993**
(21) Numéro de dépôt: 91810409.2
(22) Date de dépôt: 30.05.1991
(51) Int. Cl.: F16K 31/06

(54) **Valve à commande électromagnétique pour le contrôle du passage d'un fluide**
Elektromagnetisches Ventil zur Durchflussregelung
Electromagnetic valve for fluid flow control

(30) Priorité: 17.07.1990 CH 2376/90
(43) Date de publication de la demande: 22.01.1992
(73) Titulaire: HONEYWELL LUCIFER SA, CH-1227 Carouge (Genève) (CH)
(72) Inventeur: Borsatti, Jean-Charles, CH-1209 Genève (CH); Livet, Jean, CH-1209 Genève (CH); Prina, Raphael, CH-1258 Perly (CH)
(74) Mandataire: ARDIN & CIE S.A.

(56) Documents cités:
- EP-A- 0 128 124
- EP-A- 0 304 186
- US-A- 3 223 802
- US-A- 3 235 223
- US-A- 4 504 039

## Description

La présente invention a pour objet une valve à commande électromagnétique pour le contrôle du passage d'un fluide entre au moins un premier passage et au moins un second passage ou vice-versa, comprenant un corps avec lesdits passages, un noyau ferromagnétique fixe et un noyau ferromagnétique mobile logés face à face dans un alésage cylindrique, dans lequel débouchent les deux passages, une bobine d'excitation permettant de créer un champ magnétique pour provoquer un déplacement du noyau mobile en direction du noyau fixe contre l'action d'une force de rappel, le second passage pour le fluide débouchant radialement dans ledit alésage cylin- drique à la hauteur de l'extrémité du noyau mobile qui est la plus éloignée du noyau fixe, le noyau mobile comportant une jupe prolongeant son extrémité la plus éloignée du noyau fixe et au moins un passage longitudinal reliant son extrémité la plus éloignée du noyau fixe à son extrémité proche du noyau fixe.

Une valve de ce genre est décrite dans le document EP 0 128 124. Dans cette valve, les pressions statiques exercées sur les deux côtés du noyau mobile sont égales de sorte qu'il n'en résulte pas de force hydrauliques statiques agissant sur le noyau mobile. Cette valve n'est cependant pas adaptée à contrôler le passage de fluides dans le deux sens et, dans au moins un sens de passage, le fluide est susceptible d'exercer une poussée dynamique considérable sur le noyau mobile. La vitesse de réaction de la valve est alors fortement diminuée.

L'invention a pour but d'augmenter la vitesse de réaction des valves de ce type en permettant le contrôle du passage du fluide suivant les deux sens, tout en évitant que la pression du fluide n'exerce sur le noyau mobile une poussée dynamique ou force résultante dirigée dans le sens de son déplacement.

A cet effet, la valve est caractérisée en ce qu'elle comprend une pièce cylindrique fixe disposée dans ledit alésage cylindrique et s'étendant depuis l'extrémité de l'alésage cylindrique qui est opposée à celle contenant le noyau ferromagnétique fixe jusqu'en regard du second passage débouchant radialement dans l'alésage, un espace annulaire étant ménagé entre cette pièce cylindrique et la paroi de l'alésage, ladite jupe étant agencée pour s'engager dans ledit espace annulaire, ladite pièce cylindrique comprenant au moins un perçage relié au premier passage et comportant un élément déflecteur conformé de façon à diriger le fluide sensiblement radialement dans l'espace annulaire.

Le dessin annexé représente schématiquement et à titre d'exemple une forme d'exécution et une variante de la valve selon l'invention.

La figure 1 est une coupe axiale de la forme d'exécution.

La figure 2 en est une coupe selon la ligne II-II de la figure 1.

La figure 3 est un schéma explicatif.

La figure 4 est une coupe partielle de la variante d'exécution.

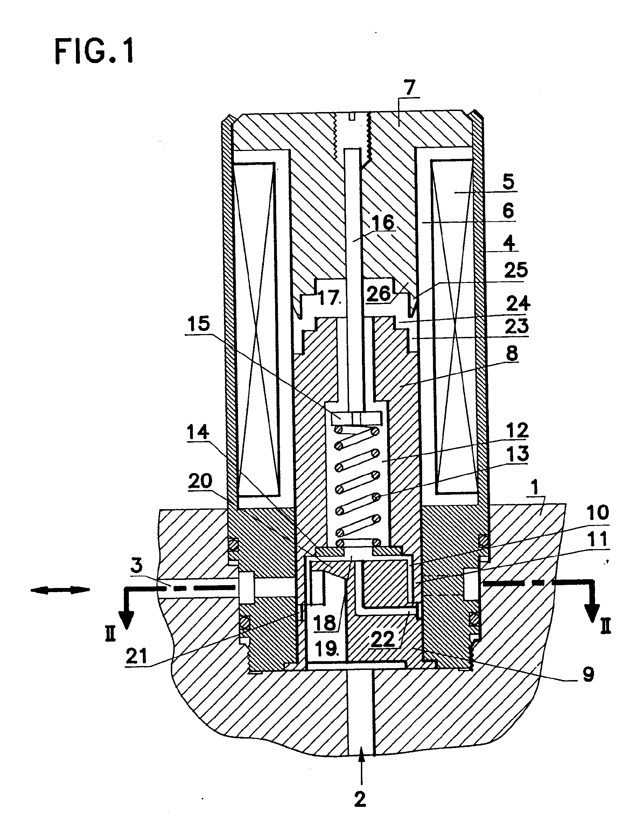

Comme le montre la figure 1, la valve comprend un corps 1, avec deux passages 2 et 3 pour l'entrée et la sortie du fluide à contrôler et inversément, car la valve est prévue pour commander le passage du fluide dans un sens et dans l'autre. Le corps 1 porte un boîtier 4 en matière ferromagnétique qui contient une bobine électrique 5 portée par un corps 6, dont l'évidement intérieur constitue un alésage cylindrique contenant un noyau ferromagnétique fixe 7 et un noyau ferromagnétique mobile 8.

Une pièce cylindrique 9 est forcée dans l'extrémité inférieure de l'alésage cylindrique et s'étend jusqu'en regard du passage radial 3. Cette pièce 9 est conformée pour ménager entre elle et l'alésage un espace annulaire 10 dans lequel peut s'engager une jupe 11 constituant la partie inférieure du noyau mobile 8. Ce dernier présente un passage longitudinal 12 dans lequel est logé un ressort à boudin 13, dont une extrémité prend appui contre une pastille 14 forcée dans le noyau 8, son autre extrémité s'appuyant contre la tête 15 d'une tige 16 portée par le noyau fixe 7.

Le passage longitudinal 12 met en communication l'espace 17 compris entre les deux noyaux magnétiques et l'espace 18 compris entre le noyau mobile 8 et la pièce cylindrique 9. Ainsi, la pression statique exercée sur les deux extrémités du noyau mobile 8 est la même, de sorte qu'il n'en résulte pas de force hydraulique agissant sur ce noyau 8.

Il y a encore lieu de relever que la pièce cylindrique 9 présente trois perçages verticaux 19 mettant en communication les deux passages 2 et 3 lorsque le noyau mobile 8 est attiré vers le noyau fixe 7. Comme le montre la figure 1, une portion 20 de la pièce 9 constitue un déflecteur au-dessus du passage 19, de sorte que le fluide passant du passage 2 vers le passage 3 est dirigé radialement sur la partie inférieure de la jupe 11 et n'exerce par conséquent pas de poussée dynamique sur cette dernière.

La pièce 9 est conformée de façon à ménager une rainure annulaire 21 juste au-dessous de la jupe 11, cette rainure communiquant par un passage 22 avec l'espace 18, ce qui contribue à permettre l'équilibre des pressions du fluide.

Il y a lieu de remarquer que les deux faces en regard l'une de l'autre du noyau fixe et du noyau mobile présentent deux creusures 23 et 24 et deux parties saillantes 25 et 26 destinées à pénétrer dans ladite creusure, ceci dans le but d'obtenir une force d'attraction magnétique entre les noyaux qui soit sensiblement constante sur une majeure partie de la course du noyau mobile 8. On voit encore que la profondeur d'une de ces creusures 23, respectivement 24 est différente de celle de l'autre, tandis que les hauteurs des parties saillantes 25 et 26 correspondent sensiblement aux profondeurs respectives des creusures, d'une façon qu'en fin de course d'attraction du noyau mobile les deux parties saillantes 25 et 26 soient engagées dans les deux creusures 23 et 24.

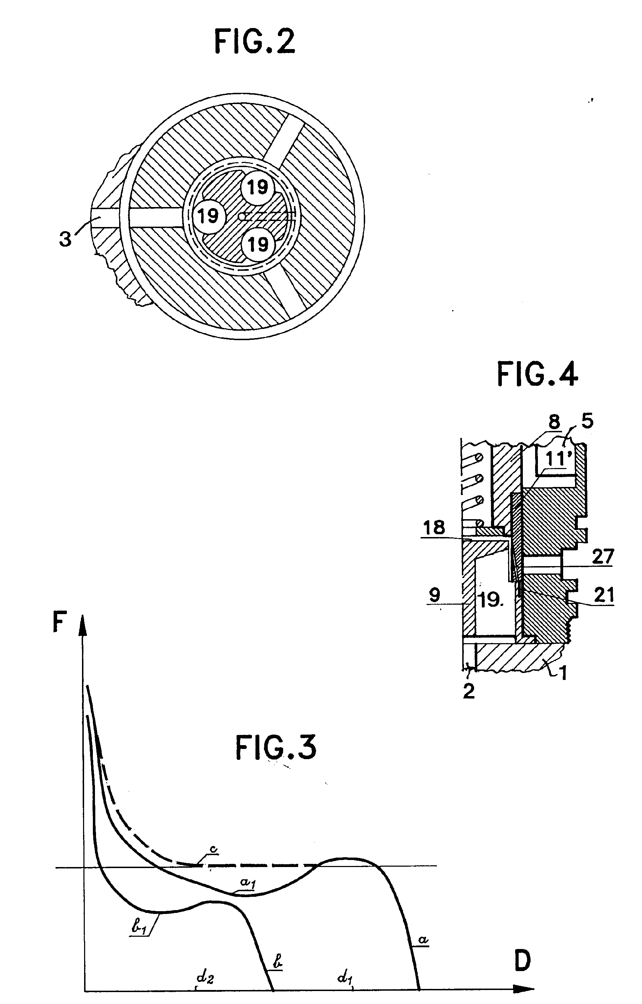

La figure 3 représente la force d'attraction magnétique F en fonction de la course D du noyau magnétique mobile. La courbe a représente sensiblement la force due au champ magnétique produit entre la partie saillante 25 et la creusure 23, tandis que la courbe b correspond à la force due au champ magnétique réniant entre la partie saillante 26 et la creusure 24. Ces deux courbes présentent chacune une portion d'attraction plus faible a1 et respectivement b1 qui se produisent quand les parties saillantes pénètrent dans les creusures et que le champ magnétique principal est alors dirigé suivant un sens radial aux deux noyaux et ne contribue donc pas à la force d'attraction magnétique dans le sens de déplacement du noyau mobile. La courbe c montre l'addition des forces d'attraction selon les courbes a et b et présente une portion comprise entre les points d1 et d2 correspondant à une force d'attraction sensiblement constante.

Il est avantageux, dans le but d'obtenir un réglage fin du débit du fluide, d'alimenter la bobine d'excitation 5 par des impulsions de courant délivrées par une source à une fréquence plus élevée que la fréquence propre d'oscillation résultant de la masse du noyau 8 et de la force de rappel du ressort 13. Dans la pratique, on obtient de bons résultats avec des impulsions sensiblement rectangulaires d'une fréquence de l'ordre de 400 Hz. On peut prévoir un rapport cyclique variable et périodique superposé à ces impulsions, ce rapport cyclique pouvant donner des fréquences telles que 38-42-38-42... Hz. Ceci produit une vibration du noyau qui empêche le collage de celui-ci dans l'alésage.

La figure 4 montre une variante d'exécution dans laquelle la pièce cylindrique 9 ne présente pas de perçage 22, la communication entre la rainure annulaire 21 et l'espace 18 étant obtenue par des perçages 27 prévus dans la jupe 11' qui est constituée par une pièce rapportée sur le noyau 8.

Dans les deux exemples illustrés, l'obturation du passage du fluide est réalisé par la surface externe de la jupe 11 qui prend appui contre la surface interne de l'alésage cylindrique dans lequel se déplace le noyau 8. Toutefois, on pourrait aussi prévoir que la jupe 11 prenne appui par sa surface interne contre la surface externe de la pièce cylindrique 9.

On peut bien entendu prévoir de nombreuses variantes d'exécution et notamment les parties saillantes 25 et 26 pourraient faire partie de l'une et respectivement de l'autre des deux noyaux 7 et 8. Ces parties saillantes et les creusures ne doivent pas nécessairement être de section circulaire, bien qu'en principe c'est cette forme qui est la plus commode pour l'usinage.

## Revendications

1. Valve à commande électromagnétique pour le contrôle du passage d'un fluide entre au moins un premier passage (2) et au moins un second passage (3) ou vice-versa, comprenant un corps (1) avec lesdits passages, un noyau ferromagnétique fixe (7) et un noyau ferromagnétique mobile (8) logés face à face dans un alésage cylindrique, dans lequel débouchent les deux passages (2, 3), une bobine d'excitation permettant de créer un champ magnétique pour provoquer un déplacement du noyau mobile (8) en direction du noyau fixe (7) contre l'action d'une force de rappel (13), le second passage (3) pour le fluide débouchant radialement dans ledit alésage cylindrique à la hauteur de l'extrémité du noyau mobile (8) qui est la plus éloignée du noyau fixe (7), le noyau mobile (8) comportant une jupe (11) prolongeant son extrémité la plus éloignée du noyau fixe (7) et au moins un passage longitudinal (12) reliant son extrémité la plus éloignée du noyau fixe (7) à son extrémité proche du noyau fixe (7), **caractérisée** en ce que la valve comprend une pièce cylindrique fixe (9) disposée dans ledit alésage cylindrique et s'étendant depuis l'extrémité de l'alésage cylindrique qui est opposée à celle contenant le noyau ferromagnétique fixe (7) jusqu'en regard du second passage (3) débouchant radialement dans l'alésage, un espace annulaire (10) étant ménagé entre cette pièce cylindrique (9) et la paroi de l'alésage, ladite jupe (11) étant agencée pour s'engager dans ledit espace annulaire (10), ladite pièce cylindrique (9) comprenant au moins un perçage (19) relié au premier passage (2) et comportant un élément déflecteur (20) conformé de façon à diriger le fluide sensiblement radialement dans l'espace annulaire (10).

2. Valve selon la revendication 1, **caractérisée** en ce que la pièce cylindrique (9) est conformée pour délimiter une chambre (21) avec la paroi dudit alésage cylindrique d'une part et avec le côté libre de la jupe (11) d'autre part, lorsque le noyau mobile (8) se trouve dans la position la plus éloignée du noyau fixe (7), ladite chambre (21) communiquant par au moins un passage (22, 27) avec des espaces (17, 18) situés à chaque extrémité du noyau mobile (8) qui présente ledit passage longitudinal (12).

3. Valve selon la revendication 2, **caractérisée** en ce que, dans le but d'obtenir une force d'attraction magnétique entre les noyaux (7, 8) qui soit sensiblement constante sur une majeure partie de la course du noyau mobile (8), les deux faces tournées l'une vers l'autre des deux noyaux (7, 8) présentent au moins deux creusures (23, 24) et deux parties saillantes (25, 26) destinées à pénétrer dans lesdites creusures (23, 24).

4. Valve selon la revendication 3, **caractérisée** en ce que la profondeur d'une des creusures (23) est différente de celle de l'autre (24), les hauteurs des parties saillantes (25, 26) correspondant sensiblement aux profondeurs respectives des creusures (23, 24), de façon qu'en fin de course d'attraction du noyau mobile, les deux parties saillantes (25, 26) soient engagées dans les deux creusures (23, 24).

5. Valve selon la revendication 4, **caractérisée** en ce que les creusures (23, 24) sont situées sur une même face d'un noyau (8), les deux parties saillantes (25, 26) étant disposées sur une même face de l'autre noyau (7).

6. Valve selon la revendication 4 ou 5, dans laquelle les noyaux (7, 8) sont de forme cylindrique circulaire, **caractérisée** en ce que les parties saillantes (25, 26) et les creusures (23, 24) ont des sections circulaires.

7. Valve selon l'une des revendications précédentes, **caractérisée** en ce qu'elle est combinée avec une source électrique d'alimentation de la bobine d'excitation (5), cette source délivrant des impulsions de courant.

8. Valve selon la revendication 7, **caractérisée** en ce que la source délivre des impulsions de courant à une fréquence plus élevée que la fréquence d'oscillation résultant de la masse du noyau mobile (8) et de la force de rappel (13) exercée sur lui.

## Patentansprüche

1. Elektromagnetisches Ventil zur Durchflussregelung eines Fluidums zwischen zumindest einem ersten Durchlass (2) und zumindest einem zweiten Durchlass (3) oder umgekehrt, mit einem Gehäuse (1) mit den benannten Durchlässen, einem ortsfesten ferromagnetischen Kern (7) und einem beweglichen ferromagnetischen Kern (8), die gegenüberliegend in einer zylindrischen Bohrung gelagert sind, in welche die zwei Durchlässe (2,3) einmünden, eine Erregerwicklung, die es erlaubt, ein magnetisches Feld zu erregen, um eine Verschiebung des beweglichen Kerns (8) in Richtung des ortsfesten Kerns (7) entgegen der Wirkung einer Gegenkraft (13) zu bewirken, wobei der zweite Durchlass (3) für das Fluidum radial auf der Höhe des vom ortsfesten Kern (7) abgewandten Endes des beweglichen Kerns (8) in die benannte zylindrische Bohrung einmündet, wobei der bewegliche Kern (8) einen sein vom ortsfesten Kern (7) abgewandtes Ende verlängernden Flansch (11) und einen Längsdurchlass (12) aufweist, welcher sein vom ortsfesten Kern (7) abgewandtes Ende mit seinem beim ortsfesten Kern (7) liegenden Ende verbindet, **dadurch** **gekennzeichnet,** dass das Ventil ein ortsfestes zylindrisches Teilstück (9) aufweist, das in der benannten zylindrischen Bohrung angeordnet ist und das sich vom Ende der zylindrischen Bohrung, das entgegengesetzt dem mit dem ortsfesten ferromagnetischen Kern (7) versehenen Ende liegt, bis gegenüber dem zweiten radial in die Bohrung einmündenden Durchlass erstreckt, wobei eine ringförmiger Raum (10) zwischen diesem zylindrischen Teilstück (9) und der Wand der Bohrung vorgesehen ist und der benannte Flansch (11) derart angeordnet ist, dass er sich in den benannten zylindrischen Raum (10) erstreckt, wobei das benannte zylindrische Teilstück (9) zumindest eine Durchbohrung (19) aufweist, die mit dem ersten Durchlass (2) verbunden ist und die ein Deflektorelement (20) aufweist, das so ausgebildet ist, dass es das Fluidum ungefähr radial in den ringförmigen Raum (10) richtet.

2. Ventil nach Anspruch 1, dadurch gekennzeichnet, dass das zylindrische Teilstück (9) derart ausgebildet ist, dass es mit der Wand der benannten zylindrischen Bohrung einerseits und mit dem freien Ende des Flansches (11) andererseits eine Kammer begrenzt, wenn der bewegliche Kern (8) sich in der vom ortsfesten Kern (7) am weit entferntesten Lage befindet, wobei die benannte Kammer (21) durch zumindest einen Durchlass (22, 27) mit Räumen (17, 18) verbunden ist, die sich an beiden Enden des mit dem benannten Längsdurchlass (12) versehenen beweglichen Kerns befinden.

3. Ventil nach Anspruch 2, dadurch gekennzeichnet, dass die beiden sich gegenüberliegenden Seiten der beiden Kerne (7, 8) zumindest zwei Vertiefungen (23, 24) und zwei vorstehende, zum Eindringen in die benannten Vertiefungen (23, 24) bestimmte Teile (25, 26) aufweisen, und dies zum Ziel, zwischen den beiden Kernen (7, 8) eine magnetische Anziehungskraft zu erreichen, die über den grössten Teil der Verschiebung des beweglichen Kerns (8) annähernd konstant ist.

4. Ventil nach Anspruch 3, dadurch gekennzeichnet, dass die Tiefe der einen Vertiefungen (23) verschieden von der der anderen (24) ist, wobei die Höhen der vorstehenden Teile (25, 26) annähernd den respektiven Tiefen der Vertiefungen (23, 24) entsprechen, so dass am Ende einer Anziehungsverschiebung des beweglichen Kerns die beiden vorstehenden Teile (25, 26) in die beiden Vertiefungen eingefügt sind.

5. Ventil nach Anspruch 4, dadurch gekennzeichnet, dass die Vertiefungen (23, 24) sich auf einer gleichen Seite des einen Kerns (8) befinden, wobei die vorstehenden Teile (25, 26) auf einer gleichen Seite des anderen Kerns (7) angeordnet sind.

6. Ventil nach Anspruch 4 oder 5, bei welchem die Kerne (7, 8) von kreisförmig zylindrischer Form sind, dadurch gekennzeichnet, dass die vorstehenden Teile (25, 26) und die Vertiefungen (23, 24) einen kreisförmigen Querschnitt aufweisen.

7. Ventil nach einem der vorhergehenden Ansprüche, dadurch gekennzeichnet, dass es mit einer Stromversorgungsquelle der Erregerwicklung (5) verbunden ist, wobei diese Quelle Stromimpulse abgibt.

8. Ventil nach Anspruch 7, dadurch gekennzeichnet, dass die Quelle Stromimpulse mit einer höheren Frequenz als die Oszillationsfrequenz der Masse des beweglichen Kerns (8) und der auf ihn einwirkenden Gegenkraft (13) abgibt.

## Claims

1. Electromagnetic control valve for controlling the flow of a fluid between at least one first passage (2) and at least one second passage (3) or vice-versa, comprising a body (1) with the said passages, a fixed ferromagnetic core (7) and a movable ferromagnetic core(8) disposed face to face in a cylindrical bore in which open the two passages (2, 3), an excitation winding permitting creating a magnetic field to effect a displacement of the movable core(8) in the direction of the fixed core (7) against the action of a return force (13), the second passage (3) for the fluid opens radially in the said cylindrical bore at the height of the end of the movable core(8) which is farther from the fixed core (7), the movable core (8) comprising a skirt (11) extending its end farther from the fixed core (7) and at least one longitudinal passage (12) connecting its end farther from the fixed core (7) to its end near the fixed core (7), characterized in that the valve comprises a fixed cylindrical member (9) disposed in the said cylindrical bore and extending from the end of the cylindrical bore which is opposite to that containing the fixed ferromagnetic core (7) to a point opposite the second passage (3) opening radially in the bore, an annular space (10) being provided between this cylindrical member (9) and the wall of the bore, the said skirt (11) being adapted to engage in the said annular space (10) , the said cylindrical member (9) comprising at least one boring (19) connected to the first passage (2) and comprising a deflector member (20) shaped in order to direct the fluid substantially radially into the annular space (10).

2. Valve according to claim 1, characterized in that the cylindrical member (9) is so shaped as to delimit with the wall of the said cylindrical bore on the one hand and with the free end of the skirt (11) on the other hand a chamber (21) when the movable core (8) is in the position fartherst off the fixed core (7) , the said chamber (21) communicating through at least one passage (22, 27) with spaces (17, 18) situated at each end of the movable core (8) comprising the said longitudinal passage (12).

3. Valve according to claim 2, characterized in that, so as to obtain a magnetic attraction force between the cores (7, 8) which will be substantially constant over the major portion of the path of the movable core (8), the two confronting surfaces of the two cores (7, 8) have at least two recesses (23, 24) and two projecting portions (25, 26) intended to penetrate the said recesses (23, 24).

4. Valve according to claim 3, characterized in that the depth of one of the recesses (23) is different from that of the other (24), the heights of the projecting portions (25, 26) corresponding substantially to the respective depths of the recesses (23, 24), such that at the end of the attraction movement of the movable core, the two projecting portions (25, 26) will be engaged in the two recesses (23, 24).

5. Valve according to claim 4, characterized in that the recesses (23, 24) are situated on a same face of the core (8), the two projecting portions (25, 26) being disposed on a same face of the other core (7).

6. Valve according to claim 4 or 5, in which the cores (7, 8) are of circular cylindrical shape, characterized in that the projecting portions (25, 26) and the recesses (23, 24) have circular sections.

7. Valve according to one of the preceding claims, characterized in that it is combined with an electrical supply source of the excitation winding (5), this source delivering current pulses.

8. Valve according to claim 7, characterized in that the source delivers current pulses at a higher frequency than the oscillation frequency resulting from the mass of the movable core (8) and the return force (13) exerted on it.
